Europäisches Patentamt

European Patent Office

Office européen des brevets

(11) Publication number: **0 051 450**
**B1**

# EUROPEAN PATENT SPECIFICATION

(45) Date of publication of patent specification: **22.01.86**

(21) Application number: **81305116.6**

(22) Date of filing: **28.10.81**

(51) Int. Cl.⁴: **C 08 J 3/20,** C 08 J 3/22,
C 08 L 21/00

(54) Polymer-carbon black mixing.

(30) Priority: **31.10.80 CA 363667**

(43) Date of publication of application:
**12.05.82 Bulletin 82/19**

(45) Publication of the grant of the patent:
**22.01.86 Bulletin 86/04**

(84) Designated Contracting States:
**BE DE FR GB IT NL SE**

(56) References cited:
**FR-A-2 447 946**
**GB-A- 635 213**
**US-A-2 623 024**
**US-A-3 872 036**

(73) Proprietor: **POLYSAR LIMITED**
**Sarnia Ontario N7T 7M2 (CA)**

(72) Inventor: **Briggs, George James**
**871 Retlaw Drive**
**Sarnia Ontario (CA)**
Inventor: **Wei, Yung-Kang**
**1063 Lombardy Drive**
**Sarnia Ontario (CA)**

(74) Representative: **Perry, Robert Edward et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for mixing polymers and carbon black, to prepare a composition comprising carbon black and two or more $C_{4-5}$ conjugated diolefin-containing polymers.

It is known that vulcanisates may be prepared by mixing a suitable synthetic or natural polymer with one or more fillers and then with cure active agents, and shaping and heating the resultant mixture. A variety of suitable fillers is known; they include various inorganic materials and various grades of carbon black.

It is also well known that it is necessary to control the various steps in the process, including the formation of the polymer/filler mixture, in order that the vulcanisate should have the desired properties. For example, the filler should be well dispersed in the polymer and the temperature in the various steps should not be allowed to reach too high a value. Examples of the many books which have been written on the subject are "Vulcanisation of Elastomers" by G. Alliger and I. J. Sjothum, Reinhold Publishing Corp, N.Y. 1964; "Vulcanisation and Vulcanising Agents" by Werner Hofmann, Palmerton Publishing Co. Inc. N.Y., 1967; and "Rubber Technology and Manufacture", edited by C. M. Blow, The Chemical Rubber Company, Cleveland 1971.

One suitable process for producing a vulcanisate comprises the steps of (a) mixing two or more $C_{4-5}$ conjugated diolefin-containing polymers with carbon black and other compounding ingredients, except cure active agents; (b) resting the resultant composition; (c) mixing the composition with other compounding ingredients, including sulphur, sulphur-containing or peroxidic cure active agents; (d) shaping the resultant mixture; and (e) vulcanising the shaped mixture by heating it at from 145 to 225°C for from 3 to 60 minutes. It has now been found that a vulcanisate of satisfactory properties can be obtained if, in step (a), the polymers are mixed in at least two separate steps.

GB—A—635213 discloses a method of making heterogeneous compositions by forming a first composition containing polymer and carbon black, forming a second composition containing polymer and, if desired, carbon black, and incorporating the first composition as discrete dispersed particles throughout the second composition as matrix.

GB—A—2046277 (and FR—A—2447946) disclose mixing carbon black with a certain amount of a polybutadiene having a 1,2-content of 60 to 90 mole % and natural rubber and/or cis-1,4-polyisoprene, and then adding additional polymer to the mixture, in order to give a product having a predetermined carbon black content. The product is used to produce the tread portion of tyres.

According to the present invention, a process for preparing a vulcanisable composition comprising a sulphur, sulphur-containing or peroxide cure-active agent, carbon black and two or more curable polymers selected from $C_{4-5}$ conjugated diolefin-containing synthetic polymers and natural rubber, which comprises forming mixtures containing the curuble polymers in at least two separate steps and combining the mixtures, is characterised in that the vulcanizable composition is prepared by (i) forming a first mixture of at least 60% by weight of the carbon black and of other compounding ingredients except cure-active agents with one or more $C_{4-5}$ conjugated diolefin-containing synthetic polymers in an amount of from 33 to 60% by weight of the total weight of the curable polymers, (ii) forming a second mixture of any remaining carbon black and of other compounding ingredients except cure-active agents with the remainder of the curable polymers, (iii) resting the first and second mixtures, and (iv) mixing the rested mixtures and the cure-active agent.

It will be apparent that an essential feature of the present invention is that, in a first step, a major proportion (or all) of the carbon black to be used is mixed with a certain proportion of one or more of the rubbers (a convenient term for the "curable polymers"). If not all the carbon black is used in the first step, the minor proportion of the carbon black may be mixed with one or more, the remaining proportion, of the rubbers, in the second step. The separately prepared proportions of the rubbers, one or both of which comprises carbon black in admixture therewith, are rested and then mixed together, suitably at the vulcanisate production stage at which the cure-active agents are incorporated.

Polymers which can be used in the invention are the $C_{4-5}$ conjugated diolefin-containing synthetic polymers such as polybutadiene, polyisoprene and styrene-butadiene polymers, and also natural rubber which is, of course, a polyisoprene. Such rubbery polymers are well known. A suitable polybutadiene may contain from 30 to 98% cis-1,4 structure; a polyisoprene may contain more than 90% cis-1,4 structure; a styrene-butadiene polymer may contain from 15 to 40% by weight styrene.

The or each polymer in the mixture formed in the first step of the process of the invention may be selected from styrene-butadiene polymer, polyisoprene and polybutadiene, the remainder of the curable polymers being one or more polymers selected from styrene-butadiene polymer, polyisoprene, polybutadiene and natural rubber. More preferably, the polymer in the mixture is one of styrene-butadiene polymer and polybutadiene, the remainder of the curable polymers being one or two of styrene-butadiene polymer, polybutadiene and natural rubber.

For example, a single polymer, e.g. polybutadiene or butadiene-styrene polymer, but not natural rubber, may be used for mixing with a major proportion of the carbon black. The composition formed in the process of the invention may comprise two polymers, e.g. of polybutadiene, butadiene-styrene polymer and natural rubber; either one of, or portions of both of, the synthetic polymers (that is, for example, polybutadiene and/or the styrene-butadiene polymer) may be used for mixing with the major proportion of the carbon black. Alternatively, the composition may comprise three polymers, e.g. polybutadiene, butadiene-styrene polymer and natural rubber, in which case the natural rubber may only be mixed with a minor proportion of the carbon black.

In preferred emodiments of the invention, a styrene-butadiene polymer and a styrene-butadiene polymer-oil-carbon black masterbatch are used with the styrene-butadiene polymer being mixed with a zero to minor proportion of the carbon black; a styrene-butadiene polymer and an oil-extended styrene-butadiene polymer are used with the styrene-butadiene polymer being mixed with a zero to minor proportion of the carbon black; a styrene-butadiene polymer and a polybutadiene are used with either polymer being mixed with a zero to minor proportion of the carbon black; a styrene-butadiene polymer and natural rubber are used with the natural rubber being mixed with a zero to minor proportion of the carbon black; or a styrene-butadiene polymer, polybutadiene and natural rubbers are used with the natural rubber being mixed with a zero to minor proportion of the carbon black. Where natural rubber is specified, it is also contemplated that the natural rubber may be partially or completely replaced by a green strength styrene-butadiene polymer prepared according to either of Canadian Patent Specifications Nos. 1,014,296 and 1,061,048.

The carbon blacks that may be used in this invention are those well known in the industry and which act as reinforcing agents. Following the designations given in ASTM D 1765, those blacks which may be used, by way of example, include N 110, N 220, N 330, N 550, N 660 and N 765, and mixtures thereof.

The mixing may be conducted as in the preparation of a polymer-carbon black or a polymer-oil-carbon black masterbatch. The preparation of polymer-carbon black or polymer-oil-carbon black masterbatches is well known in the industry; the polymer, usually in the form of an emulsion in water, the oil (when used) and the carbon black (as a slurry in water) are fed to a coagulation vessel where the are contacted with a coagulation agent under controlled conditions of mixing to yield the masterbatch which is recovered in well known manner. When such a masterbatch is used, further carbon black may be added for mixing with the masterbatch or with the other polymer(s). Such a masterbatch may be used as the mixture of step (i), with or without admixture with other compounding ingredients and may be supplied, together with additives in step (ii), for curing. When such a masterbatch is used, it preferably contains a styrene-butadiene polymer, and from 30 to 150, preferably from 40 to 80, parts by weight carbon black per 100 parts by weight of polymer, and from 0 to 100, preferably from 25 to 50, parts by weight oil per 100 parts by weight of polymer.

The polymer and carbon black may also be mixed in conventional rubber mixing equipment such as a rubber mill of an internal mixer. It is often then preferred to use from 30 to 80 parts by weight carbon black per 100 parts by weight of polymer, from 60 to 100% by weight of the carbon black being used in step (i) when two or three polymers are used. From 60 to 100% by weight carbon black may be mixed with from 40 to 60% by weight of the polymers when one or two polymers are used. Preferably, when two or three polymers or when one or two polymers are used, from 75 to 100% by weight of the carbon black is mixed in step (i) with the polymer(s) when the amount of carbon black is from 30 to 50 parts by weight of 100 parts by weight of polymer(s), and from 60 to 75% by weight of the carbon black is mixed in step (i) with the polymer(s) when the amount of the carbon black is from 50 to 80 parts by weight per 100 parts by weight of polymer(s). Such mixing may generally be for from 2 to 10, preferably from 2 to 5, minutes, with the initial temperature of the mill or internal mixer generally being from 60 to 110°C, and the final temperature generally being from 125 to 170°C.

When the major proportion, but not all, of the carbon black is used in step (i), the remaining carbon black is added in step (ii). It will often be appropriate to form a mixture of the remaining carbon black and the remainder of the curable polymers for addition to the mixture formed in step (i). Either or both of these mixtures may be rested before the addition. When the remainder of the curable polymers comprises at least two polymers, it is preferred that one at least of these is mixed with the remaining carbon black, separately from the other polymer(s) of the remainder of the curable polymers.

When the composition comprises three polymers, step (i) may include either one polymer or all of one polymer and a portion of a second polymer, and step (ii) may include either the remaining two polymers or all of the remaining polymer and the remaining portion of the second polymers. When the remaining two polymers are used in step (ii), the carbon black may be mixed with both such polymers in a single mix or may be mixed, in varying proportions, separately with each of such polymers or with only one of such polymers. Further, natural rubber may not be used as the polymer or parts of the polymers in step (i), where the polymers used are selected from $C_{4-5}$ conjugated diolefin-containing synthetic polymers such as polybutadiene, polyisoprene or styrene-butadiene polymers, whereas, in step (ii), the polymers which may be used include also natural rubber. For example, when styrene-butadiene polymer, polybutadiene and natural rubber are to be used, the styrene-butadiene polymer and/or polybutadiene may be used in step (i) and the styrene-butadiene polymer and/or polybutadiene and natural rubber may be used in step (ii), optionally in two separate mixes each of which contains only one polymer.

The composition which is formed in the process of the invention usually comprises one or more compounding ingredients in addition to the carbon black. Suitable such ingredients include other fillers such as clay, whiting and silica, rubber reclaim, oils, plasticisers, waxes, antioxidants and/or anti-ozonants, tackifiers, bonding agents, zinc oxide and stearic acid. These compounding ingredients may be introduced in step (i) and/or step (ii), or partly into both of steps (i) and (ii). Preferably, oil, plasticiser, tackifier, anti-oxidant, zinc oxide, stearic acid and bonding agent or parts thereof will be mixed with the polymer and carbon black in either step (i) and/or step (ii).

The composition which is formed in the process of the invention is, for use in the production of vulcanisates, mixed with one or more cure active agents. Cure active agents that may be used include sulphur, various sulphur-containing compounds known in the art as accelerators or ultra-accelerators, and organic peroxidic compounds known in the art as curatives. Sulphur may be used as the pure elementary material or as a dispersion in oil. Examples of sulphur-containing compounds known as accelerators include the thiazoles, benzothiazoles, thiuram sulphides and disulphides, sulphenamides, mercaptobenzothiazole and dichiocarbamates. Examples of organic peroxidic compounds known as curatives include dicumyl peroxide, benzoyl peroxide and lauryl peroxide.

Mixing in, after resting, of the cure active agent(s) may be conducted on a rubber mill or in an internal mixer. The temperature at the start of mixing is generally from 30 to 60°C, and the final temperature is generally from 80 to 110°C. The mixing time is generally from 1 to 10, preferably 1 to 3, minutes.

Although it appears that the process of this invention may involve more mixing steps than is customary, this is actually not the case because the total amount of polymer, carbon black and other compounding ingredients is not changed and the throughout rate of the equipment is not significantly affected.

A vulcanisable composition prepared by a process according to the invention may be shaped, and the shaped composition heated at from 145 to 225°C for from 3 to 60 minutes, to form a vulcanisate.

Vulcanisates prepared using the process of the invention may have one or more of various characteristics such as low heat build-up, low power loss and associated low rolling resistance, low elongation at break, low hardness, good skid resistance, high rebound and high resistance to flex crack growth. For use in tyres, the majority of these properties are desired and would be looked for, especially reduced heat build-up and power loss; for use in mechanical goods, improvements in hardness and resistance to flex crack growth only may be desired. The compounding recipe used, specially the cure-active agent, would be adjusted to obtain the optimal vulcanisate properties for the use desired.

The following Examples illustrate the invention. All parts are by weight and all tests for vulcanisate evaluation are ASTM tests, except where otherwise specified. "Arofene' and "Taktene" may be registered Trade Marks.

Examples 1 to 4

These Examples illustrate the results for a composition containing, overall, 100 parts of polymer, 3 parts of naphthenic oil, 5 parts of an octyl-phenol-formaldehyde non-heat reactive tackifier (Arofene Resin 8318) and 40 parts of carbon black (N 550), using a single polymer.

The polymer was a free radical emulsion polymerized styrene-butadiene polymer containing about 23 per cent of styrene and having a molecular weight expressed, as the Mooney (ML 1+4 at 100°C), of about 51. Mixing of the polymer, carbon black and other compounding ingredients including the cure active agents was in an internal mixer (a Banbury mixer). For each of the step (i) and (ii) mixing, the mixer was initially at 100°C, the rotor speed was set at 77 rpm and the temperature was allowed to increase during the mixing until, at 150°C, the cooling water to the mixer was turned on and the maximum temperature reached was 160°C. The mixing time was 3.25 minutes. After discharge from the mixer, the compound was passed three times through a rubber mill at about 50°C and was then rested for at least two hours. For the cure mixing, the two compounds from steps (i) and (ii) were added to an internal mixer (a Bandbury mixer) initially at a temperature of 45°C with the rotor speed set at 52 rpm and the cure active agents were added. Cooling water was provided to the mixer so that the temperature did not exceed 95°C. The mixing time was 1.25 minutes. After discharge, the compound was banded on a rubber mill at about 50°C, to form sheets of 2 mm thickness, rested and then vulcanised by heating at 150°C for 40 minutes, as prescribed in ASTM D 3182. The vulcanizates were then tested. The details of the recipes and the vulcanizate properties are given in Table I. Also given in Table I are the vulcanizate properties for a control (Control 1), which is a vulcanizate prepared from the same polymer, oil, black, other compounding ingredients and cure active agents which has been prepared by mixing all of the polymer, oil and black in a single step followed by addition of the cure active agents in a second step. Also included in Table I is a second control (Control 2) in which the mixing procedure was similar to that of the invention but the carbon black was added in equal amounts to each of steps (i) and (ii) (i.e. neither step contained a major proportion of the carbon black). The generally improved power loss (lower value), abrasion resistance (higher value) and DeMattia flex (higher value) can be seen for the vulcanizates prepared according to the process of the invention.

**0 051 450**

TABLE I

| Example | 1 | 2 | 3 | 4 | Control 1 | Control 2 |
|---|---|---|---|---|---|---|
| Step (i) Mixing | | | | | | |
| Polymer | 50 | 50 | 50 | 50 | 100 | 50 |
| Oil | 3 | 3 | — | — | 3 | 3 |
| Carbon Black | 40 | 30 | 30 | 40 | 40 | 20 |
| Tackifier | 2.5 | 2.5 | 2.5 | 2.5 | 5 | 2.5 |
| Zinc Oxide | 2.5 | 2.5 | 2.5 | 2.5 | 5 | 2.5 |
| Stearic Acid | 0.75 | 0.75 | 0.75 | 0.75 | 1.5 | 0.75 |
| Antioxidant[1] | 0.75 | 0.75 | 0.75 | 0.75 | 1.5 | 0.75 |
| Bonding Agent (part one) | 1 | 1 | 1 | 1 | 2 | 1 |
| Step (ii) Mixing | | | | | | |
| Polymer | 50 | 50 | 50 | 50 | — | 50 |
| Oil | — | — | 3 | 3 | — | — |
| Carbon Black | — | 10 | 10 | — | — | 20 |
| Tackifier | 2.5 | 2.5 | 2.5 | 2.5 | — | 2.5 |
| Zinc Oxide | 2.5 | 2.5 | 2.5 | 2.5 | — | 2.5 |
| Stearic Acid | 0.75 | 0.75 | 0.75 | 0.75 | — | 0.75 |
| Antioxidant[1] | 0.75 | 0.75 | 0.75 | 0.75 | — | 0.75 |
| Bonding Agent (part one) | 1 | 1 | 1 | 1 | — | 1 |
| Cure Mixing | | | | | | |
| Product from Step (i) | 100.5 | 90.5 | 87.5 | 97.5 | 158 | 80.5 |
| Product from Step (ii) | 57.5 | 67.5 | 70.5 | 60.5 | — | 77.5 |
| Bonding Agent (part two) | 1 | 1 | 1 | 1 | 1 | 1 |
| Sulphur[2] | 3 | 3 | 3 | 3 | 3 | 3 |
| Curative 1[3] | 0.9 | 0.9 | 0.9 | 0.9 | 0.9 | 0.9 |
| Curative 2[4] | 0.2 | 0.2 | 0.2 | 0.2 | 0.2 | 0.2 |

Notes:

[1]—Diphenlamine-acetone reaction product
[2]—Dispersion of 20% sulphur in oil
[3]—N-cyclohexyl-2-benzothiazole sulphenamide
[4]—Diphenylguanidine

5

Vulcanizate properties

| | | | | | | |
|---|---|---|---|---|---|---|
| Tensile Strength[5] kg/cm² | 20.3 | 20.3 | 19.8 | 23.2 | 21.3 | 20.1 |
| 100% Modulus[5] kg/cm² | 2.8 | 2.7 | 2.8 | 3.0 | 3.3 | 2.7 |
| 300% Modulus[5] kg/cm² | 12.1 | 10.8 | 11.3 | 13.7 | 12.4 | 10.6 |
| Elongation at Break[5] % | 470 | 520 | 490 | 480 | 500 | 520 |
| Hardness[6] Shore C | 66 | 66 | 67 | 66 | 69 | 66 |
| Wet Skid Resistance | 53 | 50 | 53 | 50 | 50 | 53 |
| Rebound[8] % | 61 | 61 | 61 | 61.5 | 60 | 61 |
| Heat Build up[9] °C | 21 | 20 | 20.5 | 22 | 24 | 20.5 |
| DeMattia Flex[10] (600% crack growth) kcy | 11 | 12 | 10 | 10 | 6 | 14 |
| Abrasion Resistance[11] % | 47 | 43 | 38 | 51 | 48 | 37 |
| Power Loss[12] J/rev. | 1.73 | 1.82 | 1.99 | 1.75 | 1.86 | 1.89 |

Notes:

[5]—ASTM D 412
[6]—ASTM D 2240
[7]—ASTM E 303 using experimental vulcanizate slider against wet rough asphalt
[8]—ASTM D 1054
[9]—ASTM D 613—Method A
[10]—ASTM D 813
[11]—Akron Abrader—Cabot Test#5
[12]—Dunlop rotary power loss

Examples 5 and 6

Following the procedure described in Example 1, using an overall composition the same as in Example 1 except that no naphthenic oil was added, compounds were prepared each based on two different styrene-butadiene polymers. Polymer 1 was the same polymer as that used in Example 1. Polymer 2 was an oil-extended styrene-butadiene polymer, in which the styrene-butadiene polymer contained about 23 weight per cent of styrene and had a high base polymer Mooney value (ML 1+4 at 100°C of about 115) and contained about 37.5 parts of naphthenic oil per 100 parts of polymer, the oil extended polymer having a Mooney of about 49—reference in Table II to "X" parts of Polymer 2 means polymer plus oil. Table II contains the details of the experiments and the results obtained. The improvement in power loss for the vulcanizates of Examples 5 and 6 is readily apparent when compared with that of the Control (Control 3).

Example 7

Using the styrene-butadiene polymer of Example 1 as Polymer 1 and a commercially available polymer-oil-carbon black masterbatch (100 parts of styrene-butadiene polymer containing about 23 weight per cent of styrene plus 80 parts of N 550 carbon black plus 37.5 parts of naphthenic oil) as Polymer 3, a vulcanizate was prepared according to the process of this invention with the results obtained shown in Table II.

TABLE II

| Example<br>Control | 5 | 6 | 3 | | 7 |
|---|---|---|---|---|---|
| Step (i) Mixing | | | | | |
| Polymer 1 | — | — | 50 | Poly. 3 | 79.1 |
| Polymer 2 | 50 | 50 | 50 | | — |
| Carbon Black | 40 | 30 | 40 | | — |
| Tackifier | 2.5 | 2.5 | 5 | | 2.5 |
| Zinc Oxide | 2.5 | 2.5 | 5 | | 2.5 |
| Stearic Acid | 0.75 | 0.75 | 1.5 | | 0.75 |
| Antioxidant | 0.75 | 0.75 | 1.5 | | 0.75 |
| Bonding Agent (part one) | 1 | 1 | 2 | | 1 |
| Step (ii) Mixing | | | | | |
| Polymer 1 | 50 | 50 | — | Poly. 1 | 50 |
| Carbon Black | — | 10 | — | | 10 |
| Tackifier | 2.5 | 2.5 | — | | 2.5 |
| Zinc Oxide | 2.5 | 2.5 | — | | 2.5 |
| Stearic Acid | 0.75 | 0.75 | — | | 0.75 |
| Antioxidant | 0.75 | 0.75 | — | | 0.75 |
| Bonding Agent (part one) | 1 | 1 | — | | 1 |
| Cure Mixing | | | | | |
| Product from Step (i) | 97.5 | 87.5 | 155 | | 86.6 |
| Product from Step (ii) | 57.5 | 67.5 | — | | 67.5 |
| Bonding Agent (part two) | 1 | 1 | 1 | | 1 |
| Sulphur | 3 | 3 | 3 | | 3 |
| Curative 1 | 0.9 | 0.9 | 0.9 | | 0.9 |
| Curative 2 | 0.2 | 0.2 | 0.2 | | 0.2 |

TABLE II (cont.).

| Example | 5 | 6 | | 7 |
| Control | | | 3 | |
| --- | --- | --- | --- | --- |
| Vulcanizate properties | | | | |
| Tensile Strength kg/cm$^2$ | 16.8 | 18 | 19.8 | 17.6 |
| 100% Modulus kg/cm$^2$ | 2.7 | 2.5 | 2.7 | 2.5 |
| 300% Modulus kg/cm$^2$ | 11.9 | 10.3 | 10.7 | 10.4 |
| Elongation at Break % | 420 | 480 | 520 | 480 |
| Hardness Shore C | 58 | 58 | 60 | 62 |
| Wet Skid Resistance | 59 | 61 | 57 | — |
| Rebound % | 62 | 60 | 60 | 60 |
| Heat Build Up °C | 19.5 | 20 | 20 | 19.5 |
| DeMattia Flex kcy (600% crack growth) | 15 | 14 | 15 | — |
| Abrasion Resistance % | 42 | 43 | 40 | 40 |
| Power Loss J/rev | 1.9 | 1.97 | 2.5 | 1.96 |

Examples 8 and 9

In Example 8, the styrene-butadiene polymer of Example 1, Polymer 1, was used. A different polymer, polymer 4, was used in Example 9, i.e. a solution-prepared stereospecific polybutadiene Taktene 1203. The details of the recipes used and the results obtained are shown in Table III, together with a control (Control 4) in which the polymers and carbon black were mixed in a single step. The improved tensile strength, 300% modulus, rebound and power loss are readily apparent.

TABLE III

| Example | 8 | 9 | |
| Control | | | 4 |
| --- | --- | --- | --- |
| Step (i) Mixing | | | |
| Polymer 1 | 50 | — | 50 |
| Polymer 4 | — | 50 | 50 |
| Tackifier | 2.5 | 2.5 | 5 |
| Carbon Black | 40 | 40 | 40 |
| Zinc Oxide | 2.5 | 2.5 | 5 |
| Stearic Acid | 0.75 | 0.75 | 1.5 |
| Antioxidant | 0.75 | 0.75 | 1.5 |
| Bonding Agent (part one) | 1 | 1 | 2 |

# 0 051 450

TABLE III (cont.).

| Example | 8 | 9 | |
|---|---|---|---|
| Control | | | 4 |
| **Step (ii) Mixing** | | | |
| Polymer 1 | — | 50 | — |
| Polymer 4 | 50 | — | — |
| Tackifier | 2.5 | 2.5 | — |
| Carbon Black | — | — | — |
| Zinc Oxide | 2.5 | 2.5 | — |
| Stearic Acid | 0.75 | 0.75 | — |
| Antioxidant | 0.75 | 0.75 | — |
| Bonding Agent (part two) | 1 | 1 | — |
| **Cure Mixing** | | | |
| Product from Step (i) | 97.5 | 97.5 | 155 |
| Product from Step (ii) | 57.5 | 57.5 | — |
| Bonding Agent (part two) | 1 | 1 | 1 |
| Sulphur | 3 | 3 | 3 |
| Curative 1 | 0.9 | 0.9 | 0.9 |
| Curative 2 | 0.2 | 0.2 | 0.2 |
| **Vulcanizate Properties** | | | |
| Tensile Strength kg/cm$^2$ | 17.1 | 16.3 | 14.8 |
| 100% Modulus kg/cm$^2$ | 2.4 | 2.5 | 2.5 |
| 300% Modulus kg/cm$^2$ | 10 | 11 | 9.6 |
| Elongation at Break % | 480 | 400 | 440 |
| Hardness Shore C | 63 | 63 | 65 |
| Wet Skid Resistance | 41 | 41 | 40 |
| Rebound % | 72 | 73.5 | 67 |
| Heat Build up °C | | | 22 |
| DeMattia Flex kcy (600% crack growth) | 6 | 2 | 3.5 |
| Abrasion Resistance % | 52 | 52 | 46 |
| Power loss J/rev | 1.34 | 1.31 | 1.47 |

Examples 10 to 13

Three polymers were used.

Polymer 1 was the styrene-butadiene polymer of Example 1.

9

Polymer 4 was the polybutadiene of Example 9. Polymer 5 was natural rubber—the actual polymer was one coded as SMR CV and had a Money (ML 1+4 at 100°C) of 68. The three polymers were used such that the vulcanizate always contained 33.3 parts of each of the three polymers and the vulcanizate always contained 40 parts of carbon black for 100 parts of total polymers, which levels where chosen solely to illustrate the invention. Details of the compounds prepared and the vulcanizate properties are given in Table IV. Because the step (ii) mixing was undertaken in two separate mixes, using only one polymer in each mix, the Table identifies this as Step (ii) mixing—A and Step (ii) Mixing—B. For the vulcanizates prepared according to the process of the invention, small improvements in tensile strength and 300% modulus and significant improvements in heat build-up and power loss are seen. The vulcanizate properties of the controls show little variation independent of whether the major portion of the carbon black is mixed with natural rubber (Control 5), the carbon black is mixed with each polymer in equal proportions (Control 6) or all the polymers and carbon black are mixed in a single step (Control 7).

TABLE IV

| Example | 10 | 11 | 12 | 13 | | | |
|---|---|---|---|---|---|---|---|
| Control | | | | | 5 | 6 | 7 |
| **Step (i) Mixing** | | | | | | | |
| Polymer 1 | 33.3 | 33.3 | — | — | — | 33.3 | 33.3 |
| Polymer 4 | — | — | 33.3 | 33.3 | — | — | 33.3 |
| Polymer 5 | — | — | — | — | 33.3 | — | 33.3 |
| Carbon Black | 26.7 | 26.7 | 26.7 | 26.7 | 26.7 | 13.3 | 40 |
| Zinc Oxide | 1.67 | 1.67 | 1.67 | 1.67 | 1.67 | 1.67 | 5 |
| Stearic Acid | 0.5 | 0.5 | 0.5 | 0.5 | 0.5 | 0.5 | 1.5 |
| Tackifier | 1.67 | 1.67 | 1.67 | 1.67 | 1.67 | 1.67 | 5 |
| Antioxidant | 0.5 | 0.5 | 0.5 | 0.5 | 0.5 | 0.5 | 1.5 |
| Bonding Agent (part one) | 0.67 | 0.67 | 0.67 | 0.67 | 0.67 | 0.67 | 2 |
| **Step (ii) Mixing—A** | | | | | | | |
| Polymer 1 | — | — | 33.3 | — | 33.3 | — | — |
| Polymer 4 | 33.3 | — | — | — | — | 33.3 | — |
| Polymer 5 | — | 33.3 | — | 33.3 | — | — | — |
| Carbon Black | 13.3 | 13.3 | 13.3 | 13.3 | 13.3 | 13.3 | — |
| Zinc Oxide | 1.67 | 1.67 | 1.67 | 1.67 | 1.67 | 1.67 | — |
| Stearic Acid | 0.5 | 0.5 | 0.5 | 0.5 | 0.5 | 0.5 | — |
| Tackifier | 1.67 | 1.67 | 1.67 | 1.67 | 1.67 | — | — |
| Antioxidant | 0.5 | 0.5 | 0.5 | 0.5 | 0.5 | 0.5 | — |
| Bonding Agent (part one) | 0.67 | 0.67 | 0.67 | 0.67 | 0.67 | 0.67 | — |

## 0 051 450

TABLE IV (cont.).

| Example Control | 10 | 11 | 12 | 13 | 5 | 6 | 7 |
|---|---|---|---|---|---|---|---|
| **Step (ii) Mixing—B** | | | | | | | |
| Polymer 1 | — | — | — | 33.3 | — | — | — |
| Polymer 4 | — | 33.3 | — | — | 33.3 | — | — |
| Polymer 5 | 33.3 | — | 33.3 | — | — | 33.3 | — |
| Carbon Black | 0 | 0 | 0 | 0 | 0 | 13.3 | — |
| Zinc Oxide | 1.67 | 1.67 | 1.67 | 1.67 | 1.67 | 1.67 | — |
| Stearic Acid | 0.5 | 0.5 | 0.5 | 0.5 | 0.5 | 0.5 | — |
| Tackifier | 1.67 | 1.67 | 1.67 | 1.67 | 1.67 | 1.67 | — |
| Antioxidant | 0.5 | 0.5 | 0.5 | 0.5 | 0.5 | 0.5 | — |
| Bonding Agent (part one) | 0.67 | 0.67 | 0.67 | 0.67 | 0.67 | 0.67 | — |
| **Cure Mixing** | | | | | | | |
| Product from Step (i) | 65.01 | 65.01 | 65.01 | 65.01 | 65.01 | 65.01 | 154.9 |
| Product from Step (ii)—A | 51.61 | 51.61 | 51.61 | 51.61 | 51.61 | 51.61 | — |
| Product from Step (ii)—B | 38.31 | 38.31 | 38.31 | 38.31 | 38.31 | 38.31 | — |
| Bonding Agent (part two) | 1 | 1 | 1 | 1 | 1 | 1 | 1 |
| Sulphur | 3 | 3 | 3 | 3 | 3 | 3 | 3 |
| Curative 1 | 0.9 | 0.9 | 0.9 | 0.9 | 0.9 | 0.9 | 0.9 |
| Curative 2 | 0.2 | 0.2 | 0.2 | 0.2 | 0.2 | 0.2 | 0.2 |
| **Vulcanizate Properties** | | | | | | | |
| Tensile strength kg/cm$^2$ | 20.5 | 18.9 | 18.9 | 18.5 | 18.1 | 17.5 | 18.5 |
| 100% Modulus kg/cm$^2$ | 2.8 | 3.0 | 2.9 | 3.1 | 3.0 | 3.0 | 2.9 |
| 300% Modulus kg/cm$^2$ | 12.1 | 12.4 | 12.9 | 13.3 | 12.1 | 11.6 | 11.7 |
| Elongation at Break % | 470 | 440 | 430 | 400 | 430 | 430 | 450 |
| Hardness Shore C | 62 | 63 | 62 | 63 | 63 | 63 | 64 |
| Wet Skid Resistance | 45 | 46 | 47 | 44 | 46 | — | 47 |
| Rebound % | 70 | 68.5 | 69 | 69 | 68.5 | 70 | 68.5 |
| Heat Build Up °C | 15.5 | 18 | 17.5 | 17 | 18.5 | 19.5 | 17.5 |
| DeMattia Flex kcy (600% crack growth) | 9.5 | 12 | 5.5 | 6 | 6 | | 19 |
| Power Loss J/rev | 1.24 | 1.31 | 1.20 | 1.27 | 1.39 | 1.36 | 1.38 |

11

# 0 051 450

Example 14

Polymer 1 of Example 1 and Polymer 5 of Examples 10 to 13 were used. The results are shown in Table V.

TABLE V

| Example Control | 14 | 8 | 9 |
|---|---|---|---|
| **Step (i) Mixing** | | | |
| Polymer 1 | 50 | — | 50 |
| Polymer 5 | — | 50 | 50 |
| Oil | 2.5 | 2.5 | 5 |
| Carbon Black | 40 | 40 | 40 |
| Tackifier | 2.5 | 2.5 | 5 |
| Zinc Oxide | 2.5 | 2.5 | 5 |
| Stearic Acid | 0.75 | 0.75 | 1.5 |
| Antioxidant | 0.75 | 0.75 | 1.5 |
| Bonding Agent (part one) | 1 | 1 | 2 |
| **Step (ii) Mixing** | | | |
| Polymer 1 | — | 50 | — |
| Polymer 5 | 50 | — | — |
| Oil | 2.5 | 2.5 | — |
| Carbon Black | — | — | — |
| Tackifier | 2.5 | 2.5 | — |
| Zinc Oxide | 2.5 | 2.5 | — |
| Stearic Acid | 0.75 | 0.75 | — |
| Antioxidant | 0.75 | 0.75 | — |
| Bonding Agent (part one) | 1 | 1 | — |
| **Cure Mixing** | | | |
| Product from Step (i) | 100 | 100 | 160 |
| Product from Step (ii) | 60 | 60 | — |
| Bonding Agent (part two) | 1 | 1 | — |
| Sulphur | 3 | 3 | 3 |
| Curative 1 | 0.9 | 0.9 | 0.9 |
| Curative 2 | 0.2 | 0.2 | 0.2 |

12

# 0 051 450

TABLE V (cont.).

| Example Control | 14 | 8 | 9 |
|---|---|---|---|
| **Vulcanizate Properties** | | | |
| Tensile Strength kg/cm$^2$ | 17.3 | 21.2 | 17.4 |
| 100% Modulus kg/cm$^2$ | 2.9 | 3.3 | 3.4 |
| 300% Modulus kg/cm$^2$ | 14.6 | 15.1 | 14.1 |
| Elongation at Break % | 350 | 420 | 370 |
| Hardness Shore C | 62 | 66 | 65 |
| Wet Skid Resistance | 49.5 | 49.5 | 50 |
| Rebound % | 70 | 68 | 67 |
| Heat Build Up °C | | | 18 |
| DeMattia Flex kcy (600% crack growth) | 21 | 28 | 18 |
| Abrasion Resistance % | 39 | 34 | 32 |
| Power Loss J/rev | 1.37 | 1.52 | 1.53 |

## Claims

1. A process for preparing a vulcanisable composition comprising a sulphur, sulphur-containing or peroxide cure-active agent, carbon black and two or more curable polymers selected from $C_{4-5}$ conjugated diolefin-containing synthetic polymers and natural rubber, which comprises forming mixtures containing the curable polymers in at least two separate steps and combining the mixtures, characterised in that the vulcanisable composition is prepared by (i) forming a first mixture of at least 60% by weight of the carbon black and of other compounding ingredients except cure-active agents with one or more $C_{4-5}$ conjugated diolefin-containing synthetic polymers in an amount of from 33 to 60% by weight of the total weight of the curable polymers, (ii) forming a second mixture of any remaining carbon black and of other compounding ingredients except cure-active agents with the remainder of the curable polymers, (iii) resting the first and second mixtures, and (iv) mixing the rested mixtures and the curve-active agent.

2. A process according to claim 1, wherein each polymer in the first mixture is selected from styrene-butadiene polymer, polyisopropene and polybutadiene, and the remainder of the curable polymers is one or more polymers selected from styrene-butadiene polymer, polyisoprene, polybutadiene and natural rubber.

3. A process according to claim 1 or claim 2, wherein the polymer in the first mixture is one of styrene-butadiene polymer and polybutadiene, and the remainder of the curable polymers is one or two of styrene-butadiene polymer, polybutadiene and natural rubber.

4. A process according to any preceding claim, wherein the first mixture comprises from 40 to 60% by weight of the total weight of the curable polymers.

5. A process according to any preceding claim, wherein the vulcanisable composition comprises from 30 to 80 parts by weight carbon black per 100 parts by weight of the curable polymers.

6. A process according to any preceding claim, wherein the first mixture comprises a masterbatch comprising 100 parts by weight of styrene-butadiene polymer, from 20 to 50 parts by weight oil and from 40 to 80 parts by weight carbon black.

7. A process according to any of claims 1 to 5, wherein the vulcanisable composition comprises from 30 to 50 parts by weight carbon black per 100 parts by weight of the curable polymers, and the first mixture comprises at least 75% by weight of the carbon black.

8. A process according to any of claims 1 to 5, wherein the vulcanisable composition comprises from 50 to 80 parts by weight carbon black per 100 parts by weight of the curable polymers, and the first mixture comprises from 60 to 75% by weight of the carbon black.

9. A process according to any preceding claim, wherein not all the carbon black is used in the first mixture, the remainder of the curable polymers comprises at least two polymers, one of which is mixed with the remaining carbon black, separately from the other polymer(s) of the remainder of the curable polymers.

13

10. A process for producing a vulcanisate, which comprise shaping a vulcanisable composition prepared by a process according to any preceding claim, and heating the shaped mixture at from 145 to 225°C for from 3 to 60 minutes.

## Patentansprüche

1. Verfahren zur Herstellung einer vulcanisierbaren Masse aus einem Schwefel-, Schwefel enthaltendenoder Peroxid-härtungsaktiven Mittel, Ruß und zwei oder mehr härtbaren Polymeren, ausgewählt aus $C_{4-5}$-konjugierten Diolefin-enthaltenden synthetischen Polymeren und Naturkautschuk, wobei Mischungen, welche die härtbaren Polymeren enthalten, in wenigstens zwei getrennten Stufen gebildet werden und die Mischungen vereinigt werden, dadurch gekennzeichnet, daß die vulkanisierbare Masse hergestellt wird, durch (i) Bildung einer ersten Mischung aus wenigstens 60 Gew.-% des Russes und den anderen Kompoundierungsbestandteilen mit Ausnahme der härtungsaktiven Mittel mit einem oder mehreren $C_{4-5}$-konjugierten Diolefin-enthaltenden synthetischen Polymeren in einer Menge von 33 bis 60 Gew-%, bezogen auf das Gesamtgewicht der härtbaren Polymeren, (ii) Bildung einer zweiten Mischung aus etwa noch vorhandenem Ruß und anderen Kompoundierungsbestandteilen mit Ausnahme von härtungsaktiven Mitteln mit dem Rest der härtbaren Polymeren, (iii) Stehenlassen der ersten und zweiten Mischung und (iv) Mischen der stehengelassenen Mischungen mit dem härtungsaktiven Mittel.

2. Verfahren nach Anspruch 1, dadurch gekennzeichnet, daß jedes Polymere in der ersten Mischung ausgewählt wird aus einem Styrol/Butadien-Polymeren, Polyisopren sowie Polybutadien, und der Rest der härtbaren Polymeren aus einem oder mehreren Polymeren besteht, ausgewählt aus Styrol/Butadien-Polymeren, Polyisopren, Polybutatien sowie Naturkautschuk.

3. Verfahren nach Anspruch 1 oder 2, dadurch gekennzeichnet, daß das Polymere in der ersten Mischung aus einem Styrol/Butadien-Polymeren oder Polybutadien besteht und der Rest der härtbaren Polymeren aus einem oder zwei der Bestandteil Styrol/Butadien-Polymeres, Polybutadien und Naturkautschuk besteht.

4. Verfahren nach einem der vorhergehenden Ansprüche, dadurch gekennzeichnet, daß die erste Mischung 40 bis 60 Gew.-%, bezogen auf das Gesamtgewicht der härtbaren Polymeren, ausmacht.

5. Verfahren nach einem der vorhergehenden Ansprüche, dadurch gekennzeichnet, daß die vulkanisierbare Masse 30 bis 80 Gew.-Teile Ruß pro 100 Gew-.Teile der härtbaren Polymeren aufweist.

6. Verfahren nach einem der vorhergehenden Ansprüche, dadurch gekennzeichnet, daß die erste Mischung eine Masterbatch aus 100 Gew.-Teilen Styrol/Butadien-Polymerem, 20 bis 50 Gew.-Teilen Öl und 40 bis 80 Gew.-Teilen Ruß aufweist.

7. Verfahren nach einem der Ansprüche 1 bis 5, dadurch gekennzeichnet, daß die vulkanisierbare Masse 30 bis 50 Gew.-Teile Ruß pro 100 Gew.-Teile der härtbaren Polymeren aufweist und die erste Mischung wenigstens 75 Gew.-% Ruß enthält.

8. Verfahren nach einem der Ansprüche 1 bis 5, dadurch gekennzeichnet, daß die vulkanisierbare Masse 50 bis 80 Gew.-Teile Ruß pro 100 Gew.-Teile der härtbaren Polymeren aufweist und die erste Mischung 60 bis 75 Gew.-% Ruß aufweist.

9. Verfahren nach einem der vorhergehenden Ansprüche, dadurch gekennzeichnet, daß nicht der ganze Ruß in der ersten Mischung verwendet wird, der Rest der härtbaren Polymeren wenigstens zwei Polymere aufweist, von denen eines mit dem restlichen Ruß getrennt von dem anderen Polymeren oder den anderen Polymeren des Restes der härtbaren Polymeren vermischt wird.

10. Verfahren zur Herstellung eines Vulkanisats, dadurch gekennzeichnet, daß eine vulkanisierbare Masse, hergestellt nach einem Verfahren gemäß einem der vorhergehenden Ansprüche, verformt wird und die verformte Mischung auf 145 bis 225°C während 3 bis 60 Minuten erhitzt wird.

## Revendications

1. Procédé de production d'une composition vulcanisable comprenant un agent à action vulcanisante qui est du soufre, un composé contenant du soufre ou un peroxyde, du noir de carbone et deux ou plus de deux polymères vulcanisables choisis entre des polymères synthétiques contenant des dioléfines conjuguées en $C_4$ ou $C_5$ et du caoutchouc naturel, qui consiste à former des mélanges contenant les polymères vulcanisables dans au moins deux étapes séparées et à réunir les mélanges, caractérisé en ce que la composition vulcanisable est préparée (i) par formation d'un premier mélange d'au moins 60 % en poids du noir de carbone et d'autres ingrédients de formulation, excepté les agents à action vulcanisante, avec un ou plusieurs polymères synthétiques contenant des dioléfines conjuguées en $C_4$ ou $C_5$ en une quantité de 33 à 60 % en poids du poids total des polymères vulcanisables, (ii) en formant un second mélange de la totalité du noir de carbone restant et des autres ingrédients de formulation hormis les agents à action vulcanisante avec le reste des polymères vulcanisables, (iii) en faisant reposer les premier et second mélanges et (iv) en malaxant les mélanges reposés et l'agent à activité vulcanisante.

2. Procédé suivant la revendication 1, dans lequel chaque polymère dans le premier mélange est choisi entre un polymère styrène-butadiène, un polyisoprène et un polybutadiène, et le reste des polymères vulcanisables consiste en un ou plusieurs polymères choisis entre un polymère styrène-butadiène, un polyisoprène, un polybutadiène et le caoutchouc naturel.

14

3. Procédé suivant la revendication 1 ou la revendication 2, dans lequel le polymère présent dans le premier mélange est un polymère styrène-butadiène ou un polybutadiène et le reste des polymères vulcanisables consiste en un ou deux polymères choisis entre un polymère styrène-butadiène, un polybutadiène et le caoutchouc naturel.

4. Procédé suivant l'une quelconque des revendications précédentes, dans lequel le premier mélange constitue 40 à 60 % en poids du poids total des polymères vulcanisables.

5. Procédé suivant l'une quelconque des revendications précédentes, dans lequel la composition vulcanisable comprend 30 à 80 parties en poids de noir de carbone pour 100 parties en poids des polymères vulcanisables.

6. Procédé suivant l'une quelconque des revendications précédentes, dans lequel le premier mélange comprend un mélange-maître formé de 100 parties en poids de polymère styrène-butadiène, 20 à 50 parties en poids d'huile et 40 à 80 parties en poids de noir de carbone.

7. Procédé suivant l'une quelconque des revendications 1 à 5, dans lequel la composition vulcanisable comprend 30 à 50 parties en poids de noir de carbone pour 100 parties en poids des polymères vulcanisables, et le premier mélange comprend au moins 75 % en poids du noir de carbone.

8. Procédé suivant l'une quelconque des revendications 1 à 5, dans lequel la composition vulcanisable comprend 50 à 80 parties en poids de noir de carbone pour 100 parties en poids des polymères vulcanisables, et le premier mélange comprend 60 à 75 % en poids du noir de carbone.

9. Procédé suivant l'une quelconque des revendications précédentes, dans lequel on n'utilise pas tout le noir de carbone dans le premier mélange, le reste des polymères vulcanisables comprend au moins deux polymères dont l'un est mélangé avec le noir de carbone restant, séparément de l'autre ou des autres polymères constituant le reste des polymères vulcanisables.

10. Procédé de production d'un vulcanisat, qui consiste à mettre en forme un composition vulcanisable préparée par un procédé suivant l'une quelconque des revendication précédentes ete à chauffer le mélange mis en forme à 145—225°C pendant 3 à 60 minutes.